(19) Europäisches Patentamt
European Patent Office
Office européen des brevets

(11) **EP 3 538 855 B1**

(12) **EUROPÄISCHE PATENTSCHRIFT**

(45) Veröffentlichungstag und Bekanntmachung des Hinweises auf die Patenterteilung:
**19.03.2025   Patentblatt 2025/12**

(21) Anmeldenummer: **17735495.8**

(22) Anmeldetag: **04.07.2017**

(51) Internationale Patentklassifikation (IPC):
**G01J 3/46** (2006.01)          **G01J 3/02** (2006.01)

(52) Gemeinsame Patentklassifikation (CPC):
**G01J 3/0264; G01J 3/462; G01J 3/463; G01J 3/465**

(86) Internationale Anmeldenummer:
**PCT/EP2017/066576**

(87) Internationale Veröffentlichungsnummer:
**WO 2018/086771 (17.05.2018 Gazette 2018/20)**

(54) **VERFAHREN UND EINRICHTUNG ZUM ERMITTELN EINER FARBHOMOGENITÄT VON HAAREN**

METHOD AND DEVICE FOR DETERMINING THE COLOR HOMOGENEITY OF HAIR

PROCÉDÉ ET DISPOSITIF DE DÉTERMINATION D'UNE HOMOGÉNÉITÉ DE COULEUR DES CHEVEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2016   DE 102016222190**

(43) Veröffentlichungstag der Anmeldung:
**18.09.2019   Patentblatt 2019/38**

(73) Patentinhaber: Henkel AG & Co. KGaA
40589 Düsseldorf (DE)

(72) Erfinder: **KNÜBEL, Georg**
40219 Düsseldorf (DE)

(56) Entgegenhaltungen:
WO-A2-2015/044944      DE-A1- 102014 220 077
US-A1- 2011 194 762      US-A1- 2012 075 331
US-A1- 2014 118 521      US-A1- 2016 071 316

- ZHANG, GUNES, PICCARDI: "An accurate algorithm for head detection based on XYZ and HSV hair and skin color models - IEEE Conference Publication", 12 December 2008 (2008-12-12), XP055407443, Retrieved from the Internet <URL:http://ieeexplore.ieee.org/document/4712087/> [retrieved on 20170918]

**Beschreibung**

Die Erfindung betrifft ein Verfahren und eine Vorrichtung zum Ermitteln einer Farbhomogenität von Haaren.

Eine farblich einheitliche Färbung von Haaren kann ein wichtiges kosmetisches Ziel darstellen.

Von ausgefallenen modischen Statements abgesehen kann eine inhomogene Färbung, die beispielsweise Flecken oder Streifen aufweist, unerwünscht sein.

Ferner kann es ebenfalls unerwünscht sein, wenn sich bei einer anfänglich möglicherweise homogenen Haarfärbung im Lauf der Zeit, beispielsweise verursacht durch UV-Bestrahlung, Waschvorgänge oder ähnliches, Farbinhomogenitäten entwickeln.

Die Farbhomogenität kann somit einen wichtigen verbraucherrelevanten Parameter darstellen.

DE102014220077 A1 beschreibt ein Verfahren zur Identifizierung einer Haarfarbe auf einem Bild, indem eine identifizierte Verteilung der Haarfarbe mit Referenzverteilungen von Haarfarben verglichen wird. Dokument US2011194762 A1 beschreibt ein Verfahren zur Identifizierung von Haaren auf einem Bild, indem zunächst ein Konfidenzbild einer Kopfregion bestimmt und dieses Konfidenzbild analysiert wird. Dokument XP055407443 beschreibt ein Verfahren zur Erkennung eines Kopfes in Farbbildern durch Analyse des Bildes in einem Farbraum. Dokument WO2015044944 A2 beschreibt ein Verfahren zur Bestimmung von Haaren aus einer Vielzahl von Bildern von Haaren, die aus unterschiedlichen Perspektiven aufgenommen wurden. Dokument US2012/075441 A1 beschreibt ein Verfahren zur Bestimmung von Haareigenschaften mittels Spektroskopie. Dokument US 2012/075331 A1 beschreibt ein Verfahren, um die Haarfarbe auf einem Bild realistisch in eine Zielhaarfarbe zu ändern.

Für eine Beurteilung der Farbhomogenität, insbesondere auch für einen Vergleich verschiedener gefärbter Frisuren der Farbhomogenität und/oder für eine Beurteilung, wie sich die Farbhomogenität bei einer gefärbten Frisur im Lauf der Zeit entwickelt, kann ein quantitatives Maß wünschenswert sein.

In verschiedenen Ausführungsbeispielen kann eine Farbhomogenität von Frisuren einen Zielparameter darstellen, der mittels Bildverarbeitungsverfahren mit einer nachfolgenden statistischen Analyse eines Farbwinkels ermittelbar sein kann.

In verschiedenen Ausführungsbeispielen kann das Verfahren zum Ermitteln der Farbhomogenität von Haaren mit nur geringem oder ohne apparativen Aufwand ausführbar sein. Beispielsweise kann das Verfahren mittels einer App auf einem Tablet oder einem Smartphone ausführbar sein. Das kann es einem Nutzer beispielsweise ermöglichen, auch ohne professionelle Unterstützung und ohne eine Haarprobe für eine Manipulation bereitstellen zu müssen, die Farbhomogenität seiner Haare, z.B. seiner Frisur, zu bestimmen, beispielsweise unter Verwendung eines Smartphones oder Tablets zum Aufnehmen eines digitalen Bildes der Haare und eines Ermittelns der Farbhomogenität mittels des Smartphones/Tablets, wobei das Smartphone/Tablet in verschiedenen Ausführungsbeispielen Parametersatzes, bei dem einer der Parameter ein Farbton ist, definiert ist, ein Ermitteln und/oder Festlegen mindestens eines Haaruntersuchungsbereichs in dem digitalen Bild, ein Ermitteln einer Farbtonverteilung im mindestens einen Haaruntersuchungsbereich, und ein Ermitteln mindestens eines Farbhomogenitätswertes basierend auf der ermittelten Farbtonverteilung.

Die Erfindung ist in den Ansprüchen definiert, wobei Anspruch 1 ein erfindungsgemäßes Verfahren definiert und Anspruch 14 eine erfindungsgemäße Vorrichtung. Weitere bevorzugte Ausführungen sind in den abhängigen Ansprüchen 2-13 definiert.

Ausführungsbeispiele der Erfindung sind in den Figuren dargestellt und werden im Folgenden näher erläutert.

Es zeigen

Figur 1A eine Darstellung eines in einem RGB-Raum parametrisierten Bildes gefärbten Haars zur Verwendung bei einem Verfahren zum Ermitteln einer Farbhomogenität von Haaren gemäß verschiedenen Ausführungsbeispielen;

Figur 1B eine Darstellung des B-Kanals des Bildes des gefärbten Haars aus Figur 1A;

Figur 1C eine graphische Darstellung einer Intensitätswerteverteilung des B-Kanals des Bildes aus Figuren 1A und 1B;

Figur 2A eine Darstellung des in den HSV-Farbraum transformierten Bildes aus Figuren 1A bis 1C in einem Farbtonkanal gemäß verschiedenen Ausführungsbeispielen;

Figur 2B eine graphische Darstellung einer Intensitäts-/Farbtonverteilung des Farbtonkanals des Bildes aus Figur 2A;

Figur 3A eine Darstellung eines in einem RGB-Raum parametrisierten Bildes gefärbten Haars zur Verwendung bei einem Verfahren zum Ermitteln einer Farbhomogenität von Haaren gemäß verschiedenen Ausführungsbeispielen;

Figur 3B eine graphische Darstellung einer Intensitäts-/Farbtonverteilung des Farbtonkanals des Bildes aus Figur 3A;

Figur 4 eine Tabelle mit einem Vergleich von Farbwerten in einem RGB-Farbraum und einem HSV-Farbraum;

Figur 5 ein Ablaufdiagramm, welches ein Verfahren zum Ermitteln einer Farbhomogenität von Haaren gemäß verschiedenen Ausführungsbeispielen darstellt; und

Figur 6 eine graphische Darstellung einer Datenverarbeitungsvorrichtung zum Ausführen eines Verfahrens zum Ermitteln einer Farbhomogenität von Haaren gemäß verschiedenen Ausführungsbeispielen.

In der folgenden ausführlichen Beschreibung wird auf die beigefügten Zeichnungen Bezug genommen, die Teil der vorliegenden Anmeldung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Unter einem digitalen Bild kann hierin ein Datenpaket verstanden werden, welches von einem Datenverarbeitungssystem als zweidimensionale (flächige) Anordnung von Bildpunkten (auch als Pixel bezeichnet) darstellbar ist, beispielsweise in einem Koordinatensystem, welches eine x-Achse und eine y-Achse aufweist, wobei jeder Bildpunkt zumindest eine Bildposition als x,y-Koordinatenpaar und eine Intensitätsinformation aufweist, wobei die Intensitätsinformation beispielsweise als Farbe eines Pixels eines Monitors oder eines gedruckten Punktes eines ausgedruckten Bilds darstellbar ist. Das digitale Bild kann beispielsweise ein mit einer Digitalkamera aufgenommenes Foto oder ein Einzelbild einer mit einer digitalen Kamera aufgenommenen Videosequenz sein.

Unter einer "Farbe" kann hierin ein Zusammenwirken eines Farbtons (d.h. eines spektralen Farbeindrucks, auch als Buntton oder, aus dem Englischen, als Hue bezeichnet, was als das verstanden werden kann, was als die "eigentliche Farbe" angesehen wird), einer Farbintensität (d.h. wie intensiv die Farbe erscheint, z.B. verglichen mit einem neutralen Grau, was auch als Sättigung, Farbsättigung, Buntheit, Chromatizität, Farbtiefe oder, aus dem Englischen, als Saturation bezeichnet wird) und einer Helligkeit bzw. Dunkelheit (d.h. wie hell oder dunkel die Farbe erscheint) verstanden werden.

Für eine Farbdarstellung kann die Farbe in einem Farbraum parametrisiert sein.

Ein gängiger Farbraum, dem eine Farbinformation (z.B. eine Haarfarbinformation des gefärbten Haars oder des Haars vor der Färbung, was auch als Grundhaarfarbe bezeichnet wird) entstammt, oder in welchem die Farbinformation dargestellt wird so beschaffen sein, dass eine ermittelte oder dargestellte Farbe unabhängig von einem Medium ist, durch welches die Farbe ermittelt oder dargestellt wird (z.B. Farbmessgerät, Bildschirm, Drucker, Scanner, menschliches Auge, usw.). Der Farbraum kann beispielsweise ein L*a*b*-Farbraum sein. Hierbei kann der Farbton beispielsweise mittels zweier Parameter, a* und b*, parametrisiert sein.

Weitere übliche Farbräume können beispielsweise ein RGB (in Rot, Grün, Blau parametrisiert) oder CIELUV (der Farbton ist hier in einer u-v-Ebene parametrisiert) Farbraum sein, welche für eine additive Lichtfarbe, die beispielsweise bei Monitoren Anwendung findet, besser geeignet sein können als beispielsweise der L*a*b*-Farbraum, oder ein CMYK-Farbraum, der, auf einem subtraktiven Farbmodell beruhend, insbesondere in einem Vielfarbdruckbereich angewendet wird und Farben in Druck-Grundfarben entsprechenden vier Farbkanälen Cyan, Magenta, Gelb (Yellow) und Schwarz (Farbtiefe, Key) parametrisiert.

Zur Veranschaulichung von verschiedenen Ausführungsbeispielen wird hierin für einen Vergleich der RGB-Farbraum genutzt, welcher als stellvertretend für alle Farbräume zu verstehen ist, bei welchen der Farbton keinen eigenen Parameter darstellt sondern als eine Mischung von zwei oder mehr Parametern repräsentiert wird.

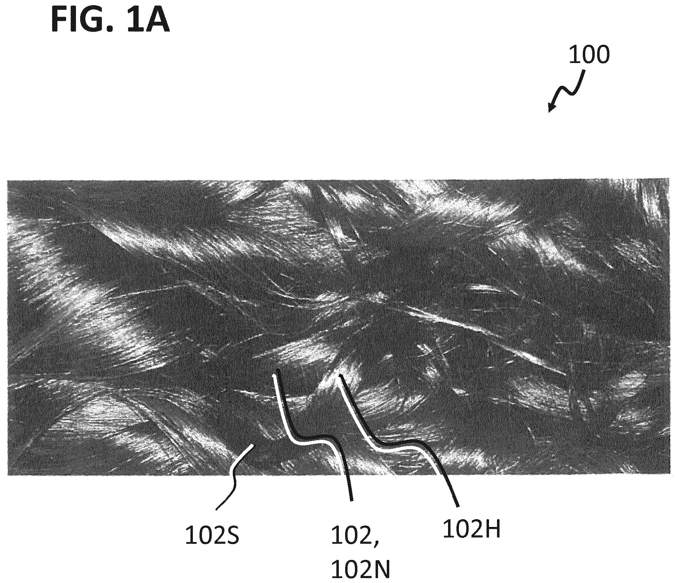

FIG. 1A zeigt eine Graustufen-Darstellung eines in einem RGB-Raum parametrisierten Bildes von (eigentlich blau) gefärbtem Haar 102 zur Verwendung bei einem Verfahren zum Ermitteln einer Farbhomogenität von Haaren gemäß verschiedenen Ausführungsbeispielen.

Auch wenn eine farbige Darstellung des gefärbten Haars 102 hierin nicht möglich ist, kann auch anhand des Graustufenbilds 100 angesichts einer Korrelation zwischen einer räumlichen Verteilung von Grauwerten und einer Haarstruktur (aufliegende Bereiche von Locken/Haarsträhnen erscheinen hell, untenliegende Locken/Haarsträhnen und Kreuzungsbereiche von Locken dunkel) ersichtlich sein, dass jeder Bildpunkt des Bildes 100 zumindest eine Überlagerung von hellen und dunklen Bildanteilen, die beleuchtete und im Schatten liegende Bereiche 102H bzw. 102S darstellen dürften, mit der Farbe des Haars 102 bilden kann. Dabei können die wegen einer Beleuchtung hellen bzw. wegen Abschattens dunklen Stellen mit einer dem Haar 102 eigenen Farbe, und damit mit einer Farbinhomogenität, nichts zu tun haben oder zumindest ein Ermitteln einer Farbhomogenität aus dem kombinierten Bild nicht ermöglichen.

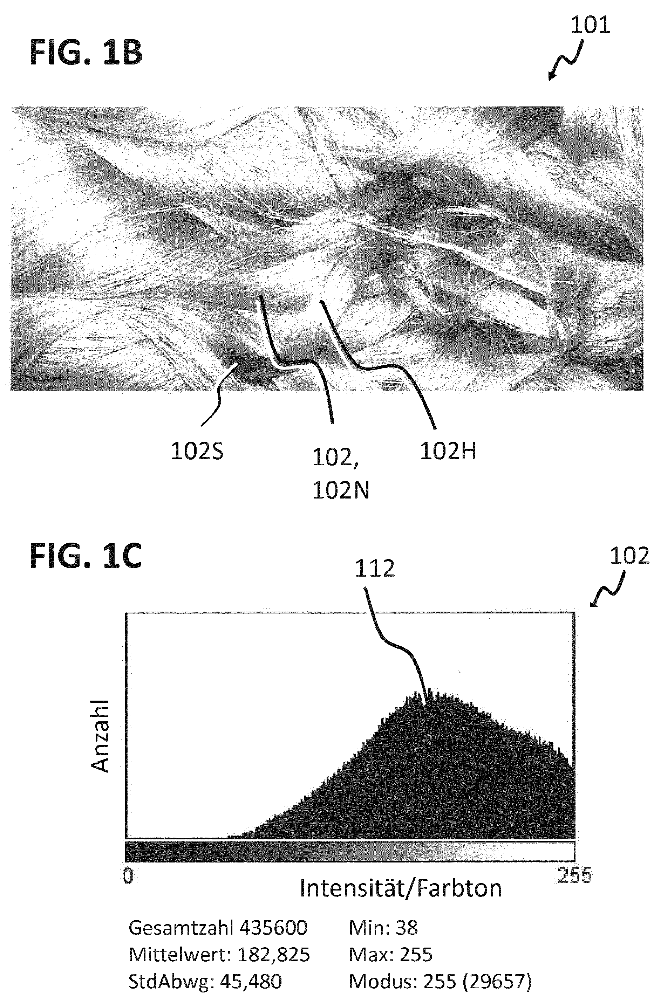

FIG. 1B zeigt eine Graustufendarstellung 101 des blauen Kanals (auch als B-Kanal bezeichnet) des Bildes 100 des (eigentlich blau) gefärbten Haars 102 aus Figur 1A.

Bei einer Darstellung des blauen Haars im blauen Kanal des RGB-parametrisierten Bildes könnte anzunehmen sein, dass sich ein im Wesentlichen gleichmäßig blau gefärbtes Bild (was in der Graustufendarstellung einer Darstellung mit einem gleichmäßigen Grauton entsprechen könnte) ergibt.

Anhand der nach wie vor auch in FIG. 1B hervorstechenden beleuchteten und im Schatten liegenden Bereiche 102H und 102S (also der Korrelation von Haarstruktur und hellen/dunklen Bildbereichen) zeigt sich jedoch, dass eine Intensität der Bildpunkte im blauen Kanal variiert, um, in Kombination mit dem roten und dem grünen Kanal, die beleuchteten und im Schatten liegenden Bereiche 102H und 102S hell bzw. dunkel wiederzugeben.

Eine große Schwankungsbereite der Intensität der Bildpunkte im blauen Kanal kann auch anhand von FIG. 1C, welche eine graphische Darstellung einer Intensitätswerteverteilung (Anzahl der Bildpunkte in Abhängigkeit des Intensitätswerts) des B-Kanals des Bildes aus FIG. 1A und FIG. 1B darstellt, ersichtlich sein.

Somit eignet sich eine Darstellung in einem der RGB-Kanäle noch nicht einmal zur Abschätzung einer Farbhomogenität von Haar, das in einer Farbe gefärbt ist, die einem der parametrisierten Kanäle entspricht, und es kann nachvollziehbar sein, dass das bei Haarfarben, die ohnehin schon als Mischungen der Farbkanäle darzustellen wären, wie beispielsweise braun oder blond, die Abschätzung der Farbhomogenität noch weniger möglich sein dürfte.

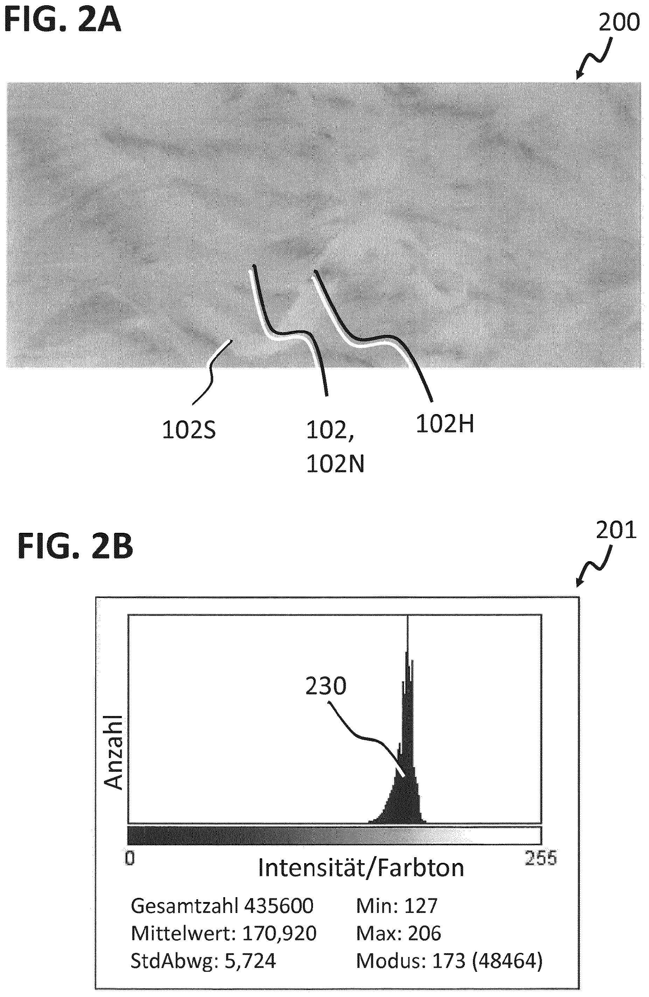

FIG. 2A zeigt, wiederum als Graustufendarstellung, eine Farbtonkanal-Darstellung 200 eines transformierten Bilds, wobei das transformierte Bild gemäß verschiedenen Ausführungsbeispielen aus dem RGB-Bild 100 aus FIG. 1A mittels Transformierens in den Farbton-Sättigung-Helligkeitswert-Farbraum (auch als Hue-Saturation-Value- (HSV-) Farbraum bezeichnet) erzeugt wurde.

Für die Darstellungen in FIG. 2A und FIG. 2B kann ein kontinuierlicher zirkulärer Farbtonwert, der als ein Winkel größer oder gleich 0° und kleiner 360° ausdrückbar ist, auf eine diskrete Verteilung mit 256 diskreten Farbtonwerten, die als 256 Grauwerte unterschiedlicher Intensität in der Abbildung in FIG. 2A dargestellt sind, abgebildet sein.

In der Farbtonkanal-Darstellung 200 zeigt sich eine deutlich einheitlichere Farbtonwertverteilung (die als Graustufendarstellung wiedergegeben ist), welche zum einen die räumliche Korrelation der beleuchteten/im Schatten liegenden Bereiche mit den hellen bzw. dunklen Stellen (welche in FIG. 1B noch vorlag) nicht mehr aufweist (in FIG. 2A sind dieselben Stellen markiert wie in FIG. 1A und FIG. 1B, wobei der Bereich 102S nicht mehr in einem überdurchschnittlich dunklen Teil des Bildes liegt und der Bereich 102H nicht mehr in einem überdurchschnittlich hellen Teil des Bildes), und welche zum anderen einer typischen Homogenität einer Haarfärbung (von einem bewussten Erzeugen von Strähnchen und/oder einer unsachgemäßen oder missglückten Färbung abgesehen) eher entsprechen kann.

Das bedeutet, dass mittels einer Überführung in HSV-Werte (oder in andere Farbräume, die einen Farbwinkel definieren, z.B. HSB, LCh) eine vollständige Separation der Farbtoninformation (Hue) von Helligkeitsinformationen erzielbar sein kann, und damit eine isolierte Betrachtung der Farbhomogenität ermöglicht sein kann.

FIG. 2B ist eine graphische Darstellung 201 einer Farbtonhäufigkeitsverteilung des Farbtonkanals (auch als Farbtonverteilung bezeichnet) des Bildes aus FIG. 2A.

In FIG. 2B zeigt sich eine im Wesentlichen monomodale Verteilung 230 der Farbtonwerte mit einer geringen Breite.

In verschiedenen Ausführungsbeispielen kann die Verteilung der Farbtonwerte genutzt werden, um mindestens einen Farbhomogenitätswert zu ermitteln.

Statistische Untersuchungsverfahren können genutzt werden, um beispielsweise eine Standardabweichung (in den Figuren mit StdAbwg abgekürzt), auch als Konfidenzintervall d bezeichnet, eine zirkuläre Varianz S und/oder eine Winkelabweichung s der Farbtonverteilung zu ermitteln.

In den unten näher beschriebenen Farbräumen, welche den Farbton als einen eigenen Parameter aufweisen und bei dem Verfahren zum Ermitteln einer Farbhomogenität von Haaren gemäß der Erfindung genutzt werden, wird der Farbton als ein Winkel ausgedrückt, der größer oder gleich 0° und kleiner 360° sein kann.

Gemäß der Erfindung wird für die statistische Untersuchung der Farbtonverteilung eine zirkuläre Statistik angewendet. Mithilfe der zirkulären Statistik kann es unter anderem möglich sein, Inhomogenitäten bei einem Übergang von 359° zu 0° zu vermeiden (solche Inhomogenitäten würden bei Anwendung der üblichen linearen statistischen Verfahren zu einem Mittelwert aus 10° und 350° von 180° führen, anstelle des sinnvollen Werts von 0°).

Den Farbtönen zugeordnete Winkel $\alpha_i$ können in verschiedenen Ausführungsbeispielen zunächst umgewandelt werden in Einheitsvektoren in einer zweidimensionalen Ebene mittels

$$r_i = \begin{pmatrix} \cos \alpha_i \\ \sin \alpha_i \end{pmatrix}.$$

Zum Erhalten eines mittleren Winkels $\overline{\alpha}$ können in verschiedenen Ausführungsbeispielen die Einheitsvektoren gemittelt werden:

$$\bar{r} = \frac{1}{N}\sum_i r_i$$

Aus dem gemittelten Vektor $\bar{r}$ kann der mittlere Winkel $\bar{\propto}$, ggf. unter Angabe eines Konfidenzintervalls, z.B. eines 95%- durch Umwandlung mittels der vier Quadranten inversen Tangensfunktion ermittelt werden.
Eine Vektorlänge

$$R = \|\bar{r}\|,$$

welche zwischen 0 und 1 liegen kann, kann bereits ein Maß darstellen für die Farbhomogenität des Haars, denn je größer die Farbhomogenität ist, desto näher können die den Farbtönen zugeordneten Winkel beieinanderliegen, und desto länger (also desto näher an 1) kann die Vektorlänge R sein.
Als Maß für die Farbhomogenität kann in verschiedenen Ausführungsbeispielen eine zirkuläre Varianz

$$S = 1 - R$$

sein. Auch diese liegt zwischen 0 und 1, ist allerdings umso kleiner, je näher die Winkel beieinanderliegen.
Ferner kann als Maß für die Farbhomogenität in verschiedenen Ausführungsbeispielen eine Winkel-Standardabweichung (auch als Winkelabweichung bezeichnet)

$$s = \sqrt{2(1 - R)}$$

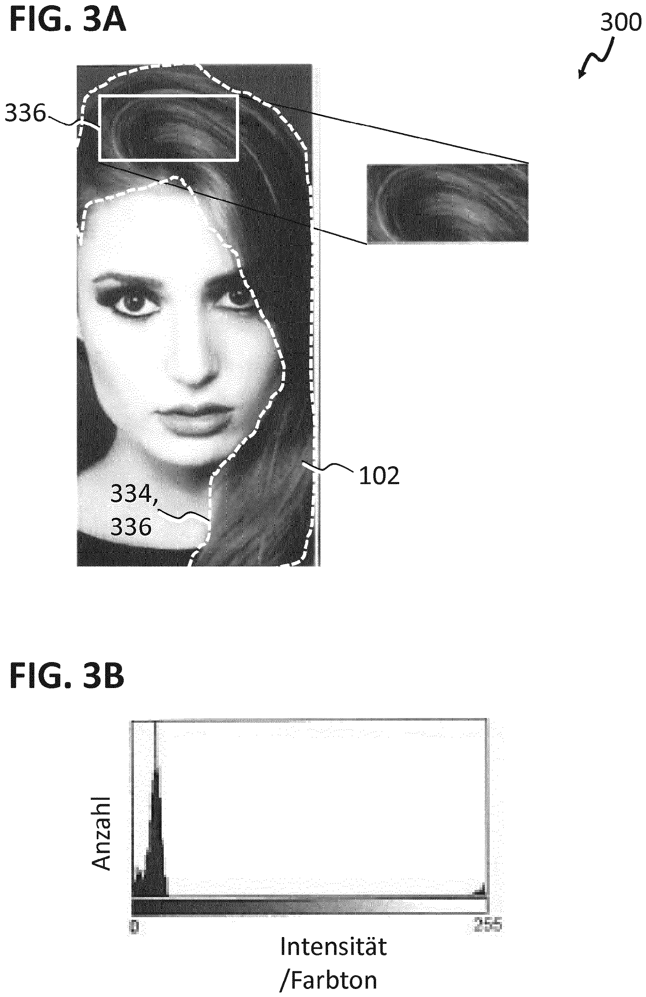

genutzt werden.
Ferner können weitere in der zirkulären Statistik bekannte Werte, die ein Maß für eine Verteilung, z.B. eine Streuung, der Farbtöne bereitstellen, verwendet werden.
Die zirkuläre Statistik kann mittels jeder geeigneten Software durchgeführt werden, beispielsweise mittels einer eigens erstellten Software, z.B. einer App, oder beispielsweise mittels vorhandener Softwarepakete, z.B. Oriana oder dem EXCEL-Tool EZ-Rose.
Im digitalen Bild kann, wie in FIG. 3A dargestellt ist, gemäß verschiedenen Ausführungsbeispielen mittels bekannter Verfahren ein Haardarstellungsbereich 334 ermittelt werden, d.h. ein Bereich, in welcher Haar abgebildet ist. Das bekannte Verfahren kann beispielsweise ein Freistellungsverfahren aufweisen, wie es z.B. bei Photoshop und anderen Software-Paketen gebräuchlich sein kann.
Der Haardarstellungsbereich 336 kann eine Mehrzahl von Bildpunkten eines digitalen Bildes 100 aufweisen, welche das Haar 102 abbilden und welche eine zusammenhängende oder aus einer Mehrzahl von Einzelflächen bestehende Fläche bilden können. Eine Ebene, in welcher der Haarbereich angeordnet sein kann, kann beispielsweise durch die x-Achse und die y-Achse des digitalen Bildes bestimmt sein.
In verschiedenen Ausführungsbeispielen kann in dem digitalen Bild mindestens ein Haaruntersuchungsbereich 336 ermittelt und/oder festgelegt werden.
In dem in FIG. 2A und FIG. 2B dargestellten Ausführungsbeispiel weist der Haaruntersuchungsbereich 336 im Wesentlichen den gesamten Bereich des digitalen Bildes auf und ist rechteckig geformt.
In verschiedenen Ausführungsbeispielen kann der Haaruntersuchungsbereich 336 einen Teilbereich des Haardarstellungsbereichs 334 aufweisen.
Im in FIG. 3A dargestellten Ausführungsbeispiel weist einer der Haaruntersuchungsbereiche 336, für welchen die in FIG. 3B dargestellte Verteilung ermittelt wurde, nur einen (rechteckigen) Teilbereich des Haardarstellungsbereichs 334 auf.
In verschiedenen Ausführungsbeispielen kann das digitale Bild zusätzlich zu dem Haardarstellungsbereich 334 noch weitere Darstellungsbereiche aufweisen, in welchen beispielsweise Objekte, Körperteile, usw. dargestellt sein können. Der Haaruntersuchungsbereich 336 kann in verschiedenen Ausführungsbeispielen so gewählt sein, dass kein Teil der sonstigen Darstellungsbereiche in den Haaruntersuchungsbereich 336 fällt.
In verschiedenen Ausführungsbeispielen kann der Haaruntersuchungsbereich 336 eine beliebige Form haben, beispielsweise kann der Haaruntersuchungsbereich 336, abgesehen von rechteckig (z.B. quadratisch), auch dreieckig, polygonal mit einer anderen Eckenzahl als drei oder vier, elliptisch, rund oder beliebig geformt sein. Beispielsweise kann der Haaruntersuchungsbereich 336 den gesamten Haardarstellungsbereich 334 aufweisen.
In verschiedenen Ausführungsbeispielen, in welchen der Haaruntersuchungsbereich 336 den gesamten Haardarstellungsbereich aufweist, kann folglich der Haaruntersuchungsbereich 336 eine ein- oder mehrteilige Fläche aufweisen, welche für eine nachfolgende Analyse, z.B. für ein Ermitteln eines Werts für einen Anteil linearer Bereiche und/oder für eine Verteilung linearer Bereiche, auch im Fall der mehrteiligen Fläche als ein einziger Haaruntersuchungsbereich 336 untersucht werden kann.

In verschiedenen Ausführungsbeispielen kann der mindestens eine Haaruntersuchungsbereich 336 eine Mehrzahl von Haaruntersuchungsbereichen 336 aufweisen. In verschiedenen Ausführungsbeispielen kann bei einer nachfolgenden Analyse, z.B. beim Ermitteln eines Farbhomogenitätswerts, jeder der Mehrzahl von Haaruntersuchungsbereichen 336 getrennt untersucht werden, d.h. für jeden der Mehrzahl von Haaruntersuchungsbereichen 336 kann der Wert für die Farbhomogenität der Haare separat ermittelt werden.

In verschiedenen Ausführungsbeispielen kann das Bestimmen des mindestens einen Haaruntersuchungsbereichs 336 das Ermitteln des Haardarstellungsbereichs 334 und ein Festlegen des mindestens einen Haaruntersuchungsbereichs 336 aufweisen.

Beispielsweise kann das Festlegen des mindestens einen Haaruntersuchungsbereichs 336 bedeuten, dass, wie oben beschrieben, der gesamte Haardarstellungsbereich als der Haaruntersuchungsbereich 336 festgelegt wird, und/oder ein- oder mehrere Haaruntersuchungsbereich/e 336 können, beispielsweise automatisiert mittels der Datenverarbeitungsvorrichtung, z.B. unter Einbeziehung vorbestimmter Bedingungen, festgelegt werden. Beispielsweise kann eine Größe und/oder Anzahl der Haaruntersuchungsbereiche 336 vorgegeben werden, z.B. mittels eines Nutzers, und die Haaruntersuchungsbereiche 336 können dann automatisiert, z.B. mittels einer geeigneten Software, festgelegt werden, beispielsweise so, dass zwischen den Haaruntersuchungsbereichen 336 ein Mindestabstand gewahrt bleibt, dass der Haardarstellungsbereich möglichst gleichmäßig abgedeckt wird, o.ä.

In verschiedenen Ausführungsbeispielen kann die Farbhomogenität für gefärbtes Haar oder/und für ungefärbtes Haar ermittelt werden.

In verschiedenen Ausführungsbeispielen kann die Farbhomogenität sowohl vor der Färbung, als auch nach der Färbung ermittelt werden. Anhand der Ergebnisse kann in verschiedenen Ausführungsbeispielen eine Beziehung ermittelt werden zwischen der Farbhomogenität vor der Färbung und der Farbhomogenität nach der Färbung, beispielsweise für eine Mehrzahl von Färbungen. Dabei können in verschiedenen Ausführungsbeispielen weitere Parameter, die das zu färbende Haar beschreiben, einbezogen werden, beispielsweise ein Ergrauungsgrad und/oder eine Vorschädigung des Haars.

In verschiedenen Ausführungsbeispielen kann die Farbhomogenität ermittelt werden als eine Funktion der Zeit, beispielsweise kann eine zeitliche Änderung der Farbhomogenität ermittelt werden nach einer oder einer Mehrzahl von Haarwäschen, in bestimmten zeitlichen Abständen nach einer Belichtung mit UV-Licht, oder ähnliches.

In verschiedenen Ausführungsbeispielen kann der Farbtonkanal dargestellt werden, beispielsweise einem Nutzer, beispielsweise unter Verwendung einer Anzeige, z.B. eines Displays.

In verschiedenen Ausführungsbeispielen kann der Farbtonkanal (Hue), unter Ausblendung der anderen Kanäle (Saturation, Value), in einen für die Darstellung geeigneten Farbraum (z.B. RGB für ein Display oder CMYK für einen Drucker) zurücktransformiert werden, so dass möglicherweise lediglich die Farbtonunterschiede zu einer unterschiedlichen Darstellung verschiedener Bildpunkte beitragen, sich aber bezüglich der Farbtöne und der Abstände der unterschiedlichen Farbtöne eine realistische Darstellung ergeben kann.

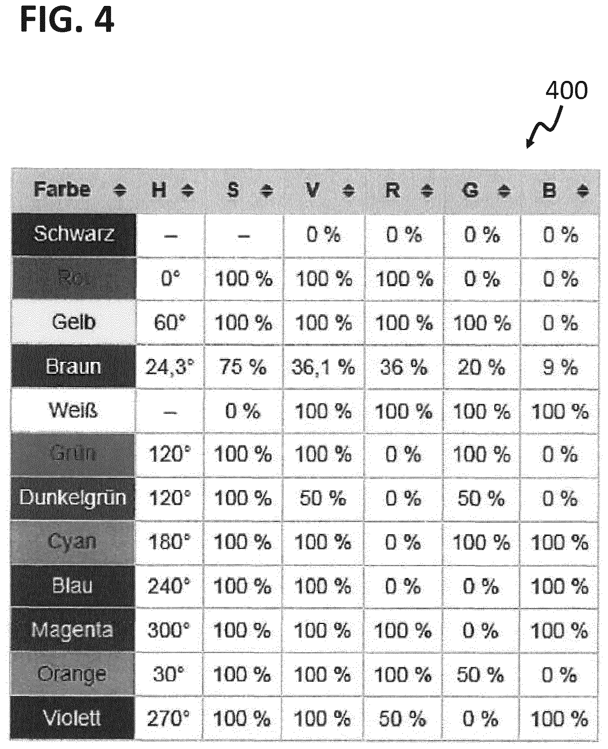

In verschiedenen Ausführungsbeispielen können für eine Darstellung den verschiedenen Farbtönen des Farbtonkanals (anders ausgedrückt, den verschiedenen Farbtonwerten des Farbtonparameters) unterschiedliche Farbtöne zugewiesen werden, die nicht den ermittelten Farbtönen entsprechen. Damit kann beispielsweise ermöglicht werden, kleine Farbtonunterschiede übertrieben darzustellen. FIG. 4 zeigt eine Tabelle 400 mit einem Vergleich von Farbwerten in einem RGB-Farbraum und einem HSV-Farbraum.

Der RGB-Farbraum kann ein additiver Farbraum sein, der Farbwahrnehmungen durch das additive Mischen dreier Grundfarben (Rot, Grün und Blau) nachbildet.

Eine mögliche Umrechnung von RGB zu HSV kann wie folgt beschrieben werden:

Vorbedingung: $R, G, B \in [0,1]$

$$MAX := \max(R, G, B), MIN := \min(R, G, B)$$

$$H := \begin{cases} 0, & \text{falls } MAX = MIN \Leftrightarrow R = G = B \\ 60° \cdot \left(0 + \dfrac{G-B}{MAX-MIN}\right), & \text{falls } MAX = R \\ 60° \cdot \left(2 + \dfrac{B-R}{MAX-MIN}\right), & \text{falls } MAX = G \\ 60° \cdot \left(4 + \dfrac{R-G}{MAX-MIN}\right), & \text{falls } MAX = B \end{cases}$$

$$\text{falls } H < 0°, \text{dann } H := H + 360°$$

$$S_{HSV} := \begin{cases} 0, & \text{falls } MAX = 0 \Leftrightarrow R = G = B = 0 \\ \dfrac{MAX - MIN}{MAX}, & \text{sonst} \end{cases}$$

$$S_{HSL} := \begin{cases} 0, & \text{falls } MAX = 0 \Leftrightarrow R = G = B = 0 \\ 0, & \text{falls } MIN = 1 \Leftrightarrow R = G = B = 0 \\ \dfrac{MAX - MIN}{1 - [MAX + MIN - 1]}, & \text{sonst} \end{cases}$$

$$V := MAX$$

$$L := \frac{MAX + MIN}{2}$$

Nachbedingung: $H \in [0°, 360°]$, $S, V, L \in [0,1]$

Diese Formeln können einige Eigenheiten der HSV-Werte widerspiegeln. Beispielsweise kann, wenn R = G = B, H ohne Bedeutung sein, so dass dann per Definition H = 0 gesetzt wird. Wenn R = G = B = 0, dann kann S ohne Bedeutung sein, so dass per Definition wird S = 0 gesetzt wird.

In verschiedenen Ausführungsbeispielen können anstelle von HSV abgewandelte Farbmodelle, beispielsweise HSL, HSB oder HSI, genutzt werden.

Der HSL-Farbraum (auch als HLS bezeichnet) kann die Parameter Farbton (auch als Farbwinkel bezeichnet) H, Farbsättigung S und Farbhelligkeit L aufweisen. Im Gegensatz zum HSV-Farbraum kann er jedoch auf den zwischen Weiß und Schwarz liegenden Graupunkt als neutrales Grau bezogen werden. Der Farbkörper kann als Doppelkegel, Zylinder oder sechsseitiges Prisma dargestellt werden. Die Farbtöne (Buntwerte) können dabei außen liegen, und der Graupunkt in der Mitte. Ähnlich aufgebaut sein kann das CIE-LCh°-Modell mit Farbhelligkeit L, Farbsättigung (Buntheit) C und dem Farbton- (Buntton-)winkel h°, womit er gewissermaßen einem in Zylinderkoordinaten dargestellten Lab-Farbraum entsprechen kann.

An den Bedürfnissen der Farbmetrik und der phototechnischen Reproduktion können das HSB- und das HSI-Modell orientiert sein. Auch hierbei können H für den Farbton (den Buntwert, Hue) und S für Sättigung stehen. Der Unterschied kann sich auf die dritte Koordinate beziehen: einerseits HSB mit der Strahlungsgröße der Helligkeit, z.B. der absoluten Helligkeit, B, anderseits als HSI-Farbmodell mit der Lichtintensität I.

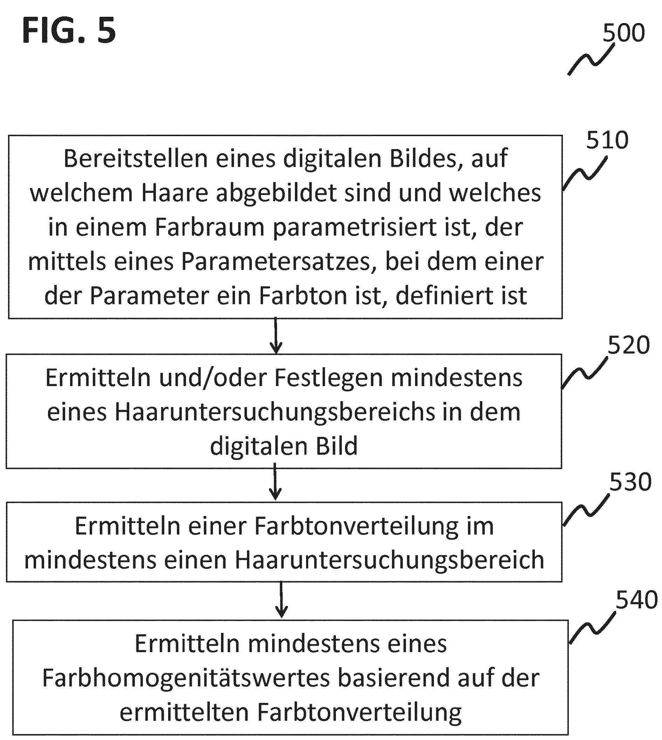

FIG. 5 zeigt ein Ablaufdiagramm 500, welches ein Verfahren zum Ermitteln einer Farbhomogenität von Haaren gemäß verschiedenen Ausführungsbeispielen darstellt.

Gemäß der Erfindung weist das Verfahren folgende Schritte auf: Bereitstellen eines digitalen Bildes, auf welchem Haare abgebildet sind und welches in einem Farbraum parametrisiert ist, der mittels eines Parametersatzes, bei dem einer der Parameter ein Farbton ist, definiert ist(bei 510), Ermitteln und/oder Festlegen mindestens eines Haaruntersuchungsbereichs in dem digitalen Bild (bei 520), Ermitteln einer Farbtonverteilung im mindestens einen Haaruntersuchungsbereich (bei 530) und Ermitteln mindestens eines Farbhomogenitätswertes basierend auf der ermittelten Farbtonverteilung (bei 540)

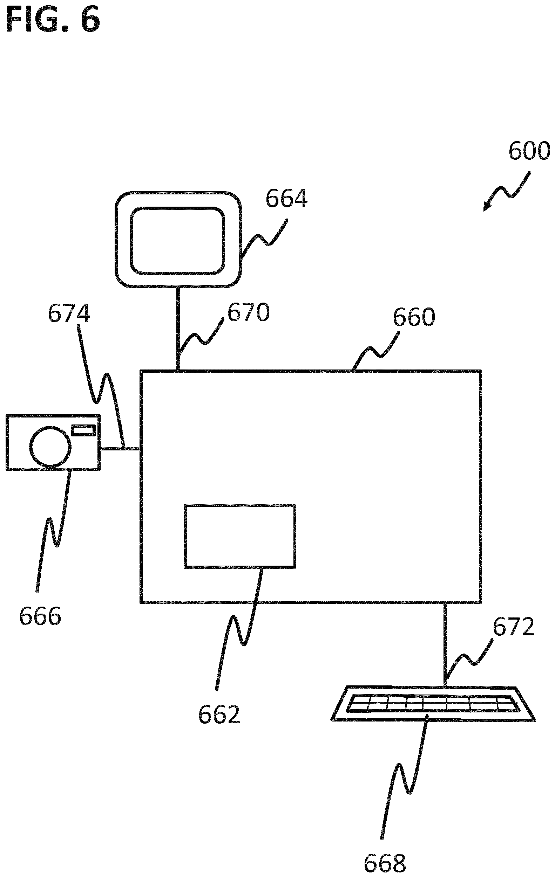

FIG. 6 zeigt eine graphische Darstellung einer Vorrichtung 600 zum Ermitteln einer Farbhomogenität von Haaren gemäß verschiedenen Ausführungsbeispielen.

Gemäß der Erfindung weist die Vorrichtung 600 zum Ermitteln einer Farbhomogenität von Haaren eine Datenverarbeitungsvorrichtung 660 auf.

Die Datenverarbeitungsvorrichtung 660 kann beispielsweise einen Computer, ein Tablet, ein Smartphone, einen Laptop, ein Smart Mirror oder jede andere Datenverarbeitungsvorrichtung, welche geeignet ist, das Verfahren zur computergestützten Haarfarbberatung gemäß verschiedenen Ausführungsbeispielen auszuführen, aufweisen. Vereinfachend wird die Datenverarbeitungsvorrichtung 660 hierin auch als Computer 660 bezeichnet. Die Datenverarbeitungsvorrichtung 660 kann einen Prozessor 662, beispielsweise einen Mikroprozessor, aufweisen.

Gemäß der Erfindung weist die Vorrichtung 600 zum Ermitteln einer Farbhomogenität von Haaren eine Anzeigevorrichtung 664 auf.

Die Anzeigevorrichtung 664 kann beispielsweise einen Bildschirm eines Smartphones, eines PCs, eines Laptops, eines Smart Mirrors oder einer sonstigen Vorrichtung 600 zum Ermitteln einer Farbhomogenität von Haaren aufweisen. Die Anzeigevorrichtung 664 kann beispielsweise genutzt werden, um Ergebnisse des Verfahrens zum Ermitteln einer Farbhomogenität von Haaren darzustellen, Eingabeparameter für das Ausführen des Verfahrens zu erfragen, oder Ähnliches.

Die Anzeigevorrichtung 664 kann mittels einer ersten Datenverbindung 670 mit der Datenverarbeitungsvorrichtung 660 verbunden sein. Die Anzeigevorrichtung 664 kann mit der Datenverarbeitungsvorrichtung 660 mittels der ersten Datenverbindung 670 Daten austauschen. In einem Fall, dass die Vorrichtung 600 ein Smartphone, einen Tablet o.ä. aufweist, können die Anzeigevorrichtung 664 und die erste Datenverbindung 670 in der Vorrichtung 600 integriert sein.

In verschiedenen Ausführungsbeispielen kann die Vorrichtung 600 zum Ermitteln einer Farbhomogenität von Haaren eine Kamera 666 aufweisen.

Die Kamera 666 kann gemäß verschiedenen Ausführungsbeispielen eingerichtet sein, ein digitales Bild 100 von Haar 102, z.B. von Haar eines Nutzers, aufzunehmen.

Die mindestens eine Kamera 666 kann gemäß verschiedenen Ausführungsbeispielen eine digitale Fotokamera oder eine Videokamera, d.h. eine Kamera 104, welche eingerichtet sein kann, eine Mehrzahl von Einzelbildern als Zeitfolge aufzuzeichnen, aufweisen.

In verschiedenen Ausführungsbeispielen kann die Vorrichtung 600 zum Ermitteln einer Farbhomogenität von Haaren eine zweite Datenverbindung 674 zwischen dem Computer 660 und der Kamera 666 aufweisen. Mittels der zweiten Datenverbindung 674 können Daten vom Computer 660 an die Kamera 666 übermittelt werden, beispielsweise für eine, z.B. herkömmliche, Softwaresteuerung der Kamera 666. Ferner können mittels der zweiten Datenverbindung 674 Daten, beispielsweise das/die von der Kamera 666 aufgenommenen digital/en Bild/er, an den Computer 660 übertragen werden. In einem Fall, dass die Vorrichtung 600 ein Smartphone, einen Tablet o.ä. aufweist, können die Kamera 666 und die zweite Datenverbindung 674 in der Vorrichtung 600 integriert sein.

In verschiedenen Ausführungsbeispielen kann bei der Vorrichtung 600 zum Ermitteln einer Farbhomogenität von Haaren auf eine Kamera 666 verzichtet werden, beispielsweise wenn der Datenverarbeitungsvorrichtung 660 das digitale Bild 100 auf andere Weise bereitgestellt wird, beispielsweise mittels einer Datenübertragung.

Die Datenverarbeitungsvorrichtung 660 kann eingerichtet sein, beispielsweise unter Verwendung des Prozessors 662, das von der Kamera 666 oder auf andere Weise empfangene Bild mittels einer Bildverarbeitungssoftware zu verarbeiten, beispielsweise um auf bekannte Weise in dem empfangenen Bild den Haardarstellungsbereich zu ermitteln und, wie oben für verschiedenen Ausführungsbeispiele beschrieben, die Farbhomogenität von Haaren zu ermitteln. Die Bildverarbeitungssoftware kann in verschiedenen Ausführungsbeispielen eine App aufweisen.

In verschiedenen Ausführungsbeispielen kann die Datenverarbeitungsvorrichtung 600 eine Eingabevorrichtung 668 zum Bereitstellen von Informationen an die Datenverarbeitungsvorrichtung 600 aufweisen, beispielsweise eine Tastatur, eine Maus, eine berührungsempfindliche Oberfläche der Anzeigevorrichtung 664, oder ähnliches.

Die Eingabevorrichtung 668 kann mittels einer dritten Datenverbindung 672 mit der Datenverarbeitungsvorrichtung 660 verbunden sein. Die Eingabevorrichtung 668 kann mit der Datenverarbeitungsvorrichtung 660 mittels der dritten Datenverbindung 672 Daten austauschen. In einem Fall, dass die Vorrichtung 600 ein Smartphone, einen Tablet o.ä. aufweist, können die Eingabevorrichtung 668 und die dritte Datenverbindung 672 in der Vorrichtung 600 integriert sein.

Weitere vorteilhafte Ausgestaltungen des Verfahrens ergeben sich aus der Beschreibung der Vorrichtung und umgekehrt.

## Patentansprüche

1.  Verfahren zum Ermitteln einer Farbhomogenität von Haaren, aufweisend:

    Bereitstellen eines digitalen Bildes, auf welchem Haare abgebildet sind und welches in einem Farbraum parametrisiert ist, der mittels eines Parametersatzes, bei dem einer der Parameter ein Farbton ist, definiert ist, wobei der Farbton durch einen Farbwinkel auf einem Farbkreis definiert ist;
    Ermitteln und/oder Festlegen mindestens eines Haaruntersuchungsbereichs in dem digitalen Bild; Ermitteln einer Farbtonverteilung im mindestens einen Haaruntersuchungsbereich; und
    Ermitteln mindestens eines Farbhomogenitätswertes basierend auf der ermittelten Farbtonverteilung, wobei eine statistische Untersuchung der Farbtonverteilung durch eine zirkuläre Statistik stattfindet, um den mindestens einen Farbhomogenitätswert zu ermitteln.

2.  Verfahren gemäß Anspruch 1,
    wobei das Bereitstellen des digitalen Bildes ein Transformieren eines ursprünglichen digitalen Bildes, welches in einem Ursprungsfarbraum parametrisiert ist, in den Farbraum aufweist, wobei der Ursprungsfarbraum vom Farbraum verschieden ist.

3. Verfahren gemäß Anspruch 1 oder 2,
wobei der Farbraum ein Farbton-Sättigung-Helligkeit-Farbraum ist.

4. Verfahren gemäß einem der Ansprüche 1 bis 3,
wobei das Ermitteln mindestens eines Farbhomogenitätswertes basierend auf der ermittelten Farbtonverteilung ein Ermitteln einer zirkulären Varianz aufweist.

5. Verfahren gemäß einem der Ansprüche 1 bis 4,
wobei das Ermitteln und/oder Festlegen mindestens eines Haaruntersuchungsbereichs ein Festlegen des mindestens einen Haaruntersuchungsbereichs durch einen Nutzer aufweist.

6. Verfahren gemäß Anspruch 5,
wobei das Festlegen des mindestens einen Haaruntersuchungsbereichs durch den Nutzer ein Festlegen von Position und/oder Form und/oder Größe des Haaruntersuchungsbereichs aufweist.

7. Verfahren gemäß einem der Ansprüche 1 bis 4,
wobei das Ermitteln und/oder Festlegen mindestens eines Haaruntersuchungsbereichs aufweist:

Ermitteln eines Haardarstellungsbereichs, in welchem das Haar dargestellt ist; und
Festlegen zumindest eines Teils des Haardarstellungsbereichs als den mindestens einen Haaruntersuchungsbereich.

8. Verfahren gemäß Anspruch 7,
wobei der mindestens eine Haaruntersuchungsbereich den gesamten Haardarstellungsbereich aufweist.

9. Verfahren gemäß einem der Ansprüche 1 bis 8,
wobei der mindestens eine Haaruntersuchungsbereich eine Mehrzahl von Haaruntersuchungsbereichen aufweist.

10. Verfahren gemäß Anspruch 9,
wobei die Mehrzahl von Haaruntersuchungsbereichen sich voneinander in ihrer Mittelpunktposition unterscheidet.

11. Verfahren gemäß Anspruch 10, ferner aufweisend: Inbeziehungsetzen der ermittelten Farbhomogenitätswertes zu den Mittelpunktpositionen der Haaruntersuchungsbereiche.

12. Verfahren gemäß einem der Ansprüche 1 bis 11, ferner aufweisend:
Darstellen des ermittelten Ergebnisses.

13. Verfahren gemäß Anspruch 12,
wobei das Darstellen des ermittelten Ergebnisses ein Darstellen des digitalen Bildes aufweist, wobei im Haardarstellungsbereich des digitalen Bildes das Haar dargestellt wird mit dem Farbton, wobei der gesamte Haardarstellungsbereich mit einer einheitlichen Farbsättigung und einer einheitlichen Helligkeit dargestellt wird.

14. Vorrichtung zum Ermitteln einer Farbhomogenität von Haaren, aufweisend:

eine Datenverarbeitungsvorrichtung; und
eine Anzeigevorrichtung;
wobei die Vorrichtung, vorzugsweise mittels einer App, eingerichtet ist, das Verfahren gemäß einem der Ansprüche 1 bis 13 auszuführen.

**Claims**

1. A method for determining a color homogeneity of hair, the method comprising:

providing a digital image in which hair is depicted and which is parameterized in a color space defined by means of a set of parameters, one of which parameters is a hue, wherein the hue is defined by a color angle on a color wheel;

determining and/or defining at least one hair analysis region in the digital image; determining a hue distribution in the at least one hair analysis region; and

determining at least one color homogeneity value based on the determined hue distribution, wherein a statistical analysis of the hue distribution is carried out using circular statistics in order to determine the at least one color homogeneity value.

2. The method according to claim 1,
wherein providing the digital image comprises transforming an original digital image, which is parameterized in an original color space, into the color space, wherein the original color space is different from the color space.

3. The method according to claim 1 or 2,
wherein the color space is a hue-saturation-lightness color space.

4. The method according to one of claims 1 to 3,
wherein determining at least one color homogeneity value based on the determined hue distribution comprises determining a circular variance.

5. The method according to one of claims 1 to 4,
wherein determining and/or defining at least one hair analysis region comprises the user defining the at least one hair analysis region.

6. The method according to claim 5,
wherein the user defining the at least one hair analysis region comprises defining a position and/or shape and/or size of the hair analysis region.

7. The method according to one of claims 1 to 4,
wherein determining and/or defining at least one hair analysis region comprises:

determining a hair display region in which the hair is displayed; and
defining at least a portion of the hair display region as the at least one hair analysis region.

8. The method according to claim 7,
wherein the at least one hair analysis region comprises the entire hair display region.

9. The method according to one of claims 1 to 8,
wherein the at least one hair analysis region comprises a plurality of hair analysis regions.

10. The method according to claim 9,
wherein the plurality of hair analysis regions differ from one another in their center position.

11. The method according to claim 10, further comprising:
relating the determined color homogeneity values to the center positions of the hair analysis regions.

12. The method according to one of claims 1 to 11, further comprising:
displaying the determined result.

13. The method according to claim 12,
wherein displaying the determined result comprises displaying the digital image, wherein, in the hair display region of the digital image, the hair is displayed with the hue, wherein the entire hair display region is displayed with a uniform color saturation and a uniform lightness.

14. A device for determining a color homogeneity of hair, the device comprising:

a data processing device; and
a display device;
wherein the device is configured, preferably by means of an app, to carry out the method according to one of claims 1 to 13.

**Revendications**

1. Procédé permettant de déterminer une homogénéité de couleur de cheveux, présentant :

   la fourniture d'une image numérique sur laquelle des cheveux sont représentés et qui est paramétrée dans un espace chromatique défini au moyen d'un ensemble de paramètres dans lequel l'un des paramètres est une teinte, dans lequel la teinte est définie par un angle de couleur sur un cercle chromatique ;
   la détermination et/ou la spécification d'au moins une zone d'examen des cheveux dans l'image numérique ; la détermination d'une distribution de teintes dans l'au moins une zone d'examen des cheveux ; et
   la détermination d'au moins une valeur d'homogénéité de couleur sur la base de la distribution de teintes déterminée, dans lequel un examen statistique de la distribution de teintes par une statistique circulaire a lieu pour déterminer l'au moins une valeur d'homogénéité de couleur.

2. Procédé selon la revendication 1,
   dans lequel la fourniture de l'image numérique présente une transformation d'une image numérique d'origine, laquelle est paramétrée dans un espace chromatique d'origine, en l'espace chromatique, dans lequel l'espace chromatique d'origine est différent de l'espace chromatique.

3. Procédé selon la revendication 1 ou 2,
   dans lequel l'espace chromatique est un espace chromatique teinte-saturation-luminosité.

4. Procédé selon l'une des revendications 1 à 3,
   dans lequel la détermination d'au moins une valeur d'homogénéité de couleur sur la base de la distribution de teintes déterminée présente une détermination d'une variance circulaire.

5. Procédé selon l'une des revendications 1 à 4,
   dans lequel la détermination et/ou la spécification d'au moins une zone d'examen des cheveux présentent une spécification de l'au moins une zone d'examen des cheveux par un utilisateur.

6. Procédé selon la revendication 5,
   dans lequel la spécification par l'utilisateur de l'au moins une zone d'examen des cheveux présente une spécification de la position et/ou de la forme et/ou de la taille de la zone d'examen des cheveux.

7. Procédé selon l'une des revendications 1 à 4,
   dans lequel la détermination et/ou la spécification d'au moins une zone d'examen des cheveux présentent :
   la détermination d'une zone de représentation des cheveux dans laquelle les cheveux sont représentés ; et la spécification d'au moins une partie de la zone de représentation des cheveux comme étant l'au moins une zone d'examen des cheveux.

8. Procédé selon la revendication 7,
   dans lequel l'au moins une zone d'examen des cheveux présente la totalité de la zone de représentation des cheveux.

9. Procédé selon l'une des revendications 1 à 8,
   dans lequel l'au moins une zone d'examen des cheveux présente une pluralité de zones d'examen des cheveux.

10. Procédé selon la revendication 9,
    dans lequel la pluralité de zones d'examen des cheveux diffèrent les unes des autres par leur position centrale.

11. Procédé selon la revendication 10, présentant en outre :
    la mise en relation de la valeur d'homogénéité de couleur déterminée avec les positions centrales des zones d'examen des cheveux.

12. Procédé selon l'une des revendications 1 à 11, présentant en outre :
    la représentation du résultat déterminé.

13. Procédé selon la revendication 12,
    dans lequel la représentation du résultat déterminé présente une représentation de l'image numérique, dans lequel, dans la zone de représentation des cheveux de l'image numérique, les cheveux sont représentés avec la teinte, dans lequel l'ensemble de la zone de représentation des cheveux est représenté avec une saturation de couleur uniforme et une luminosité uniforme.

14. Dispositif permettant de déterminer une homogénéité de couleur de cheveux, présentant :

un dispositif de traitement de données ; et
un dispositif d'affichage ;
dans lequel le dispositif est configuré, de préférence au moyen d'une application, pour mettre en œuvre le procédé selon l'une des revendications 1 à 13.

# FIG. 1A

100

102S     102,      102H
         102N

## FIG. 1B

101

102S          102,          102H
              102N

## FIG. 1C

112                                          102

Anzahl

0          Intensität/Farbton          255

Gesamtzahl 435600     Min: 38
Mittelwert: 182,825    Max: 255
StdAbwg: 45,480        Modus: 255 (29657)

## FIG. 2A

200

102S  102,  102H
      102N

## FIG. 2B

201

Anzahl

230

0   Intensität/Farbton   255

Gesamtzahl 435600    Min: 127
Mittelwert: 170,920   Max: 206
StdAbwg: 5,724       Modus: 173 (48464)

# FIG. 3A

300

336

334,
336

102

# FIG. 3B

Anzahl

0                                    255

Intensität
/Farbton

# FIG. 4

400

| Farbe ⬍ | H ⬍ | S ⬍ | V ⬍ | R ⬍ | G ⬍ | B ⬍ |
|---|---|---|---|---|---|---|
| Schwarz | — | — | 0 % | 0 % | 0 % | 0 % |
| Rot | 0° | 100 % | 100 % | 100 % | 0 % | 0 % |
| Gelb | 60° | 100 % | 100 % | 100 % | 100 % | 0 % |
| Braun | 24,3° | 75 % | 36,1 % | 36 % | 20 % | 9 % |
| Weiß | — | 0 % | 100 % | 100 % | 100 % | 100 % |
| Grün | 120° | 100 % | 100 % | 0 % | 100 % | 0 % |
| Dunkelgrün | 120° | 100 % | 50 % | 0 % | 50 % | 0 % |
| Cyan | 180° | 100 % | 100 % | 0 % | 100 % | 100 % |
| Blau | 240° | 100 % | 100 % | 0 % | 0 % | 100 % |
| Magenta | 300° | 100 % | 100 % | 100 % | 0 % | 100 % |
| Orange | 30° | 100 % | 100 % | 100 % | 50 % | 0 % |
| Violett | 270° | 100 % | 100 % | 50 % | 0 % | 100 % |

# FIG. 5

*500*

*510*

Bereitstellen eines digitalen Bildes, auf welchem Haare abgebildet sind und welches in einem Farbraum parametrisiert ist, der mittels eines Parametersatzes, bei dem einer der Parameter ein Farbton ist, definiert ist

*520*

Ermitteln und/oder Festlegen mindestens eines Haaruntersuchungsbereichs in dem digitalen Bild

*530*

Ermitteln einer Farbtonverteilung im mindestens einen Haaruntersuchungsbereich

*540*

Ermitteln mindestens eines Farbhomogenitätswertes basierend auf der ermittelten Farbtonverteilung

# FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014220077 A1
- US 2011194762 A1
- WO 2015044944 A2
- US 2012075441 A1
- US 2012075331 A1